# EUROPEAN PATENT APPLICATION

(11) **EP 4 664 636 A1**
(43) Date of publication of application: **17.12.2025**
(21) Application number: 23940504.6
(22) Date of filing: 20.12.2023
(51) Int. Cl.: H01M 50/244

(54) **BATTERY AND VEHICLE**

(30) Priority: 05.06.2023 CN 202310658845
(71) Applicant: Contemporary Amperex Technology Co., Limited, Ningde, Fujian 352100 (CN)
(72) Inventor: ZHANG, Wenhui, Ningde, Fujian 352100 (CN); LONG, Chao, Ningde, Fujian 352100 (CN); CHEN, Xingdi, Ningde, Fujian 352100 (CN); WANG, Peng, Ningde, Fujian 352100 (CN)
(74) Representative: Ziebig Hengelhaupt Intellectual Property Attorneys Patentanwaltskanzlei PartGmbB
(86) International application number: PCT/CN2023/140123
(87) International publication number: WO 2024/250630

(57) **Abstract**

Disclosed are a battery (100) and a vehicle (1000). The battery (100) comprises: a battery box (1) and at least one battery cell (20). The battery box (1) comprises a box body (11) and a top cover (12), the top cover (12) is arranged on the top of the box body (11), and an accommodation cavity (15) is defined between the top cover (12) and the box body (11). All the battery cells (20) are arranged in the accommodation cavity (15), and the upper part of at least some of the battery cells (20) is fixedly connected to the top cover (12).

## Description

### CROSS-REFERENCE TO RELATED APPLICATION

The present application is filed based on the Chinese patent application No. 202310658845.9 filed on June 05, 2023, and claims priority to this Chinese patent application, which is incorporated herein by reference in its entirety.

### TECHNICAL FIELD

The present application relates to the technical field of batteries, and more particularly, to a battery and a vehicle.

### BACKGROUND

In the related art, the top cover of a battery has insufficient rigidity and structural strength, so that when the top cover is subjected to acting force, the top cover is prone to serious deformation or even damage, which affects the operating performance of the battery, reduces the safety and reliability of the battery, and shortens the service life of the battery.

### SUMMARY OF THE INVENTION

The present application provides a battery and a vehicle, in which an upper part of a battery cell is connected to a top cover, which can enhance the rigidity and structural strength of the top cover, reduce the possibility of damage to the top cover when the battery is subjected to force, and improve the safety performance of the battery.

In a first aspect, the present application provides a battery, including: a battery box including a box body and a top cover, the top cover being arranged on the top of the box body, and an accommodation cavity being defined between the top cover and the box body; and at least one battery cell, all of the battery cells being arranged in the accommodation cavity, and the upper part of at least some of the battery cells being fixedly connected to the top cover.

In the above technical solution, by fixedly connecting the upper part of at least some of the battery cells to the top cover, the rigidity and structural strength of the top cover can be enhanced, the deformation of the top cover can be reduced when the battery is subjected to force, the possibility of damage to the top cover can be reduced, the safety performance of the battery can be improved, and the impact on the service life of the battery can be alleviated.

In some embodiments, the upper part of the battery cell is fixedly connected to the top cover by bonding.

In the above technical solution, by bonding the upper part of the battery cell to the top cover, the stability of connection between the battery cell and the top cover can be enhanced, and the operation is facilitated.

In some embodiments, the battery cell includes a body and an electrode terminal, the electrode terminal is arranged on a lower side of the body, and an upper surface of the body is connected with the top cover.

In the above technical solution, the electrode terminal is arranged on the lower side of the body, and the upper surface of the body is connected to the top cover, so that while the structural strength of the top cover is enhanced, the electrode terminal can also be kept away from the top cover, reducing the possibility of deformation of the top cover and squeezing the electrode terminal, thereby improving the safety of the battery cell.

In some embodiments, the connection between the top cover and the box body includes at least one of welding, FDS connection, bolt connection, and bonding.

The connection between the top cover and the box body includes at least one of welding, flow drill screw connection, bolt connection, and bonding. By connecting the top cover and the box body through the above connection, the stability of connection between the top cover and the box body can be enhanced, thereby improving the stability of the battery box structure while facilitating operation.

In some embodiments, the connection between the top cover and the box body includes bolt connection.

In the above technical solution, the top cover and the box body are connected by bolts. The bolts have good shear resistance, so that the strength of connection between the top cover and the box body is relatively high, and the stability of connection between the top cover and the box body is enhanced, thereby improving the stability and reliability of the overall structure of the battery box, which helps to improve the safety of the battery; in addition, such connection makes the top cover and the box body detachable relative to each other, which facilitates replacement or maintenance of the top cover or the box body as well as maintenance of the battery cell in the accommodation cavity.

In some embodiments, the connection between the top cover and the box body includes bolt connection, and there are at least two bolts, and the at least two bolts are arranged at an interval along the circumference of the top cover.

In the above technical solution, at least two bolts are arranged at an interval along the circumference of the top cover, so that the top cover and the box body can be connected along the circumference of the top cover, and the stability of connection between the top cover and the box body is enhanced, so as to further improve the stability and reliability of the overall structure of the battery box, thereby further improving the safety of the battery.

In some embodiments, the box body includes a side beam surrounding an outer peripheral side of the accommodation cavity, the top cover is connected to the top of the side beam, and at least part of the side beam is spaced apart from the battery cell; and a buffer structure is provided between the side beam and the battery cell.

In the above technical solution, the transmission of acting force between the side beam and the battery cell can be blocked by spacing the side beam apart from the battery cell. For example, when the side beam is subjected to collision force, the side beam is not likely to transmit the collision force to the battery cell, which can improve the safety of the battery cell. Besides, the side beam is spaced apart from the battery cell so that the side beam has deformation space. As such, when the side beam is subjected to force and deformed, the possibility of the battery cell being squeezed by the side beam can be reduced, which can further ensure the safety and reliability of the battery. In addition, the buffer structure can absorb collision energy. When the battery is subjected to collision, the side beam is subjected to acting force, and the side beam can transmit the acting force to the buffer structure. The buffer structure absorbs the collision energy, so that the acting force transmitted to the battery cell is smaller, which can improve the safety of the battery cell, thereby improving the safety of the battery.

In some embodiments, the buffer structure includes a buffer block; and the buffer block includes at least one of a rubber block, a foam block, and a sponge block.

In the above technical solution, the buffer block can absorb collision energy. When the battery is subjected to collision, the side beam is subjected to acting force, and the side beam can transmit the acting force to the buffer structure. The buffer block of the buffer structure absorbs the collision energy, so that the acting force transmitted to the battery cell is smaller, which can improve the safety of the battery cell, thereby improving the safety of the battery. Besides, the rubber block, foam block, and sponge block are relatively inexpensive.

In some embodiments, structural adhesive is filled between the buffer block and at least one of the top cover, the side beam, and the battery cell.

In the above technical solution, structural adhesive is filled between the buffer block and at least one of the top cover, the side beam, and the battery cell, so that the buffer block can be bonded to the top cover, the side beam, and the battery cell, which facilitates the installation of the buffer block and can improve the overall structural strength and stability of the battery. For example, when the battery is used in a vehicle, the battery is arranged at the bottom of the vehicle body, and the top cover of the battery constitutes at least part of the floor of the vehicle. When the vehicle suffers a side collision, the buffer structure can absorb part of the collision energy and reduce the impact of the collision force on the battery, thereby reducing the impact of the collision force on the floor of the vehicle, so as to improve the side collision resistance of the entire vehicle.

In some embodiments, the box body includes a bottom guard plate and a side beam, the side beam surrounds the outer peripheral side of the accommodation cavity, the bottom guard plate is connected to the bottom of the side beam, the bottom guard plate includes a main body and a connection portion, the connection portion surrounds the outer peripheral side of the main body, the connection portion is located below the side beam and connected to the side beam, the main body is located below the battery cell and spaced apart from the battery cell; and a reinforcement structure is provided on the top cover.

In the above technical solution, the bottom guard plate can be connected to the side beam by connecting the connection portion of the bottom guard plate to the side beam; the main body is spaced apart from the battery cell so that a buffering energy-absorbing space is provided between the main body and the battery cell. When the main body is subjected to acting force, the main body can be deformed to absorb part of the energy. The buffering energy-absorbing space can absorb part of the collision energy, thereby reducing the possibility of the battery cell being squeezed by the main body, so as to further improve the safety of the battery cell. In addition, by providing a reinforcement structure on the top cover, the rigidity and structural strength of the top cover can be further improved, and the possibility of damage to the top cover can be further reduced when the battery is subjected to force, thereby improving the safety performance of the battery. For example, the battery is used in a vehicle and is suitable for being installed at the bottom of the vehicle body. The top cover of the battery can constitute at least part of the floor of the vehicle. The structural strength of the top cover is further enhanced, which can improve the bearing capacity of the top cover for the seat, and the structural strength of the floor is further enhanced, thereby further improving the side collision resistance of the entire vehicle.

In some embodiments, the connection between the top cover and the box body includes bolt connection, and the bolt is passed through the reinforcement structure, the top cover, and the box body.

In the above technical solution, by passing the bolt through the reinforcement structure, the top cover, and the box body, the reinforcement structure, the top cover, and the box body can be connected to each other, which can further improve the structural strength of the top cover, and further enhance the strength of connection between the reinforcement structure, the top cover, and the box body, thereby further improving the stability and reliability of the overall structure of the battery box.

In some embodiments, the reinforcement structure includes a reinforcement beam extending in a first direction which intersects with the vertical direction.

In the above technical solution, by extending the reinforcement beam in the first direction, the structural strength of the top cover can be improved in the first direction, which helps to improve the overall structural strength of the top cover and reduce the possibility of the top cover being damaged when subjected to force.

In some embodiments, there are a plurality of reinforcement beams, and the plurality of reinforcement beams are arranged in a second direction which intersects with the vertical direction and the first direction; and at least some of the plurality of reinforcement beams are located at at least one end of the top cover in the second direction.

In the above technical solution, by arranging the plurality of reinforcement beams in the second direction, the structural strength of the top cover can be improved in the second direction, thereby improving the overall structural strength of the top cover and further reducing the possibility of the top cover being damaged when subjected to force; by locating at least some of the plurality of reinforcement beams at at least one end of the top cover in the second direction, the structural strength of the opposite ends of the top cover in the second direction can be enhanced, thereby enhancing the overall structural strength of the top cover and improving the safety performance of the battery.

In some embodiments, the battery is suitable for being installed at the bottom of the vehicle body, the first direction is the lateral direction, the second direction is the longitudinal direction, the part of the top cover opposite to the vehicle seat is the seat mounting portion, and at least some of the plurality of reinforcement beams are located at the seat mounting portion.

In the above technical solution, by locating at least some of the plurality of reinforcement beams at the seat mounting portion, the rigidity and load-bearing capacity of the seat mounting portion can be enhanced, so that the top cover of the battery can better bear the load from the seat and reduce the risk of deformation of the top cover due to excessive load. For example, when the top cover of the battery constitutes at least part of the floor of the vehicle, a reinforcement beam is arranged on the top cover to increase the structural strength of the floor of the vehicle, which can improve the load-bearing capacity of the top cover and enhance the side collision resistance capacity of the entire vehicle.

In some embodiments, the plurality of reinforcement beams include a first reinforcement beam and a second reinforcement beam, the first reinforcement beam is located at the seat mounting portion, the second reinforcement beam is located on at least one side of the first reinforcement beam in the second direction, and the structural strength of the first reinforcement beam is greater than the structural strength of the second reinforcement beam.

In the above technical solution, by making the structural strength of the first reinforcement beam greater than the structural strength of the second reinforcement beam, the structural strength and load-bearing capacity of the seat mounting portion can be further enhanced, so that the top cover of the battery can better bear the load from the seat, thereby further reducing the risk of deformation of the top cover due to excessive load.

In some embodiments, the reinforcement structure is detachably connected to the top cover.

In the above technical solution, the reinforcement structure is detachably connected to the top cover, which facilitates the disassembly and assembly between the reinforcement structure and the top cover, and facilitates the replacement or maintenance of the reinforcement structure or the top cover.

In some embodiments, the reinforcement structure includes a reinforcement plate, and the reinforcement plate and the top cover are staked in the vertical direction.

In the above technical solution, by providing a reinforcement plate on the top cover, the structural strength and load-bearing capacity of the top cover can be enhanced, thereby further improving the safety performance of the battery.

In some embodiments, the reinforcement plate extends in a second direction which intersects with the vertical direction; and there are a plurality of reinforcement plates, and at least some of the plurality of reinforcement plates are located at at least one end of the top cover in the first direction.

In the above technical solution, by extending the reinforcement plates in the second direction, the structural strength of the top cover can be improved in the second direction, which is beneficial to improving the overall structural strength of the top cover, reducing the possibility of the top cover being damaged when subjected to force, and further improving the safety of the battery; by locating at least some of the plurality of reinforcement plates at at least one end of the top cover in the first direction, the structural strength of the outer edge of the top cover can be enhanced, and when the top cover of the battery is subjected to acting force, the top cover is not likely to be deformed, which is beneficial to improving the safety performance of the battery and alleviating the impact on the service life of the battery.

In some embodiments, the connection between the top cover and the box body includes bolt connection, and at least some of the bolts are passed through the reinforcement plate, the top cover, and the box body.

In the above technical solution, by passing the bolts through the reinforcement plate, the top cover, and the box body, the reinforcement plate, the top cover, and the box body can be connected to each other, which can further improve the structural strength of the top cover, and further enhance the strength of connection between the reinforcement plate, the top cover, and the box body, thereby further improving the stability and reliability of the overall structure of the battery box.

In some embodiments, the reinforcement structure includes a reinforcement beam, the connection between the top cover and the box body includes bolt connection, and least some of the bolts are passed through the reinforcement beam, the reinforcement plate, the top cover, and the box body.

In the above technical solution, by passing at least some of the bolts through the reinforcement beam, the reinforcement plate, the top cover, and the box body, the reinforcement beam, the reinforcement plate, the top cover, and the box body can be connected to each other, which can further improve the structural strength of the top cover, and better enhance the strength of connection between the reinforcement plate, the top cover, and the box body, thereby better improving the stability and reliability of the structure of the battery box.

In some embodiments, the battery is used in a vehicle and is suitable for being installed at the bottom of the vehicle body, and the top cover is used to constitute at least part of the floor of the vehicle.

In the above technical solution, the upper part of the battery cell is connected to the top cover, which can enhance the rigidity and structural strength of the top cover, improve the load-bearing capacity of the top cover, and reduce the degree of deformation of the top cover when subjected to force; and enhance the structural strength of the floor of the vehicle to improve the side collision resistance capacity of the entire vehicle.

In a second aspect, the present application provides a vehicle, including the above battery.

In the above technical solution, by adopting the battery described above, in which the upper part of at least some of the battery cells is fixedly connected to the top cover, the rigidity and structural strength of the top cover can be enhanced, the deformation of the top cover can be reduced when the battery is subjected to force, the possibility of damage to the top cover can be reduced, the safety performance of the battery can be improved, and the impact on the service life of the battery can be alleviated.

Additional aspects and advantages of the present application will be set forth in part in the description which follows, and in part will be apparent from the description which follows, or may be learned by practice of the present application.

### BRIEF DESCRIPTION OF DRAWINGS

The above and/or additional aspects and advantages of the present application will become apparent and easily understood from the description of the embodiments in conjunction with the drawings below, in which:
FIG. 1 is a schematic structural view of a battery according to some embodiments of the present application;
FIG. 2 is a sectional view of the battery of FIG. 1;
FIG. 3 is an exploded view of the battery of FIG. 1;
FIG. 4 is a schematic structural view of a part of the battery of FIG. 1;
FIG. 5 is an enlarged view at part B in FIG. 4;
FIG. 6 is a sectional view along the line A-A in FIG. 5; and
FIG. 7 is a schematic structural view of a vehicle according to some embodiments of the present application.

Reference numerals:
1000: vehicle;
100: battery;
1. battery box; 11. box body; 110. side beam; 12. top cover; 120. seat mounting portion; 1a. reinforcement structure; 13. reinforcement beam; 131. first reinforcement beam; 132. second reinforcement beam; 14. reinforcement plate; 15. accommodation cavity; 16. bottom guard plate; 161. main body; 162. connection portion; 17. bolt;
2. battery row; 20. battery cell; 21. body; 22. electrode terminal;
3. buffer structure; 31. buffer block.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application shall have the same meanings as those generally understood by those skilled in the art of the present application. The terms used in the present application in the specification of application are merely for the purpose of describing specific embodiments and are not intended to limit the present application. The terms "include" and "have" and any variations thereof in the specification and claims and the above brief description of the drawings of the present application are intended to cover non-exclusive inclusion. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width, and other dimensions of the various components, as well as the overall thickness, length, width, and other dimensions of an integrated apparatus, in the embodiments of the present application shown in the drawings, are for illustrative purposes only, and should not constitute any limitation to the present application.

"A plurality of" appearing in the present application means two or more (including two).

The battery 100 in the present application refers to a single physical module that includes one or more battery cells 20 to provide higher voltage and capacity. For example, the battery 100 mentioned in the present application may include a battery module, a battery 100 pack, or the like. Some batteries 100 may include a battery box 1 used for encapsulating one or more battery cells 20 or a plurality of battery modules. The battery box 1 can prevent liquid or other foreign matters from affecting the charging or discharging of the battery cell(s) 20.

In the present application, the battery cell 20 may include, e.g., a lithium-ion secondary battery, a lithium-ion primary battery, a lithium-sulfur battery 100, a sodium/lithium-ion battery, a sodiumion battery, or a magnesium-ion battery, which is not limited in the embodiments of the present application. The battery cell 20 may be, e.g., a cylinder, a flat body, a cuboid, or other shape, which is not limited in the embodiments of the present application either. The battery cells 20 are generally classified into three types depending on the way of encapsulation: cylindrical battery cells, prismatic battery cells, and pouch battery cells, which is not limited in the embodiments of the present application either.

In the related art, the top cover of a battery has insufficient rigidity and structural strength, so that when the top cover is subjected to acting force, the top cover is prone to serious deformation or even damage, which affects the operating performance of the battery, reduces the safety and reliability of the battery, and shortens the service life of the battery.

On this basis, the applicant proposed a battery 100, including: a battery box 1 and at least one battery cell 20. The battery box 1 includes a box body 11 and a top cover 12, the top cover 12 is arranged on the top of the box body 11, and an accommodation cavity 15 is defined between the top cover 12 and the box body 11. All battery cells 20 are arranged in the accommodation cavity 15, and the upper part of at least some of the battery cells 20 is fixedly connected to the top cover 12.

In the battery 100 of the above structure, the upper part of at least some of the battery cells 20 is fixedly connected to the top cover 12, so that the rigidity and structural strength of the top cover 12 can be enhanced, the deformation of the top cover 12 can be reduced when the battery 100 is subjected to force, the possibility of damage to the top cover 12 can be reduced, the safety performance of the battery 100 can be improved, and the impact on the service life of the battery 100 can be alleviated.

The vehicle 1000 disclosed in the embodiments of the present application may be a fuel vehicle, a gas vehicle, a new energy vehicle, or a rail vehicle. The new energy vehicle may be an all-electric vehicle, a hybrid vehicle, an extended-range electric vehicle, or the like.

The battery 100 according to the embodiments of the present application will be described below in conjunction with the drawings.

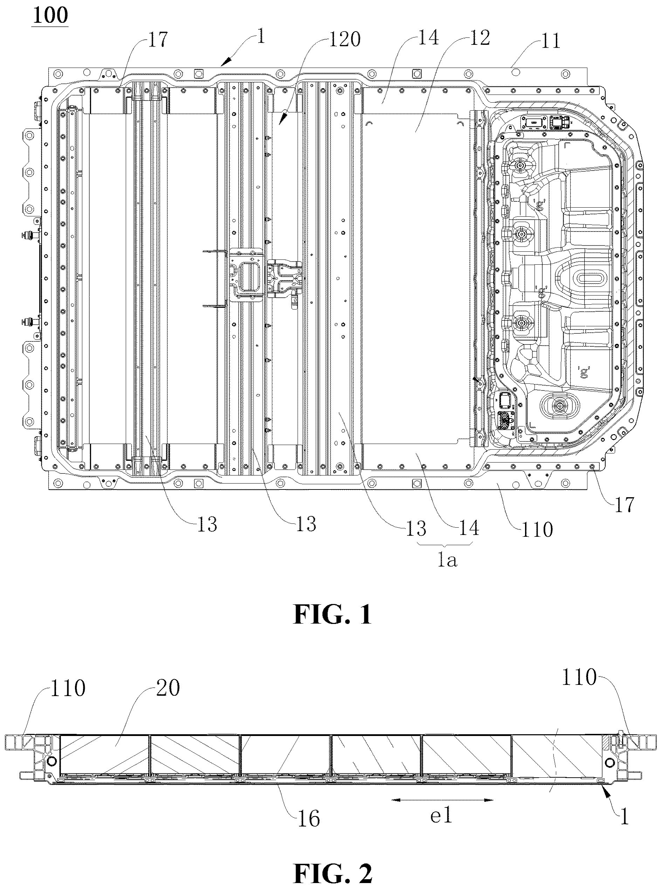

Referring to FIGS. 1 to 6, in a first aspect, the present application provides a battery 100, including: a battery box 1 and at least one battery cell 20. The battery box 1 includes a box body 11 and a top cover 12, the top cover 12 is arranged on the top of the box body 11, and an accommodation cavity 15 is defined between the top cover 12 and the box body 11. All battery cells 20 are arranged in the accommodation cavity 15, and the upper part of at least some of the battery cells 20 is fixedly connected to the top cover 12.

Optionally, the battery 100 described above may be used in the vehicle 1000 and is suitable for being installed at the bottom of the vehicle body, and the top cover 12 of the battery 100 may constitute at least part of the floor of the vehicle 1000, thereby realizing CTB (Cell to Body). When the structural strength of the top cover 12 of the battery 100 is greater, the structural strength of the floor of the vehicle 1000 is also greater, which is beneficial to improving the side collision resistance of the entire vehicle.

The expression "at least one battery cell 20" means that there may be one battery cell 20; or alternatively, there may be a plurality of battery cells 20. For example, when there are a plurality of battery cells 20, the plurality of battery cells 20 are arranged into a plurality of battery rows 2, and the plurality of battery rows 2 are arranged in a first direction (e.g., see the direction e1 in the drawings), and each battery row 2 includes a plurality of battery cells 20 arranged in a second direction (e.g., see the direction e2 in the drawings), and the second direction intersects with the first direction.

The expression "the upper part of at least some of the battery cells 20 is fixedly connected to the top cover 12" may mean that the upper part of all the battery cells 20 is fixedly connected to the top cover 12; or alternatively, the upper part of some of the battery cells 20 is fixedly connected to the top cover 12.

In the above technical solution, by fixedly connecting the upper part of at least some of the battery cells 20 to the top cover 12, the rigidity and structural strength of the top cover 12 can be enhanced, the deformation of the top cover 12 can be reduced when the battery 100 is subjected to force, the possibility of damage to the top cover 12 can be reduced, the safety performance of the battery 100 can be improved, and the impact on the service life of the battery 100 can be alleviated.

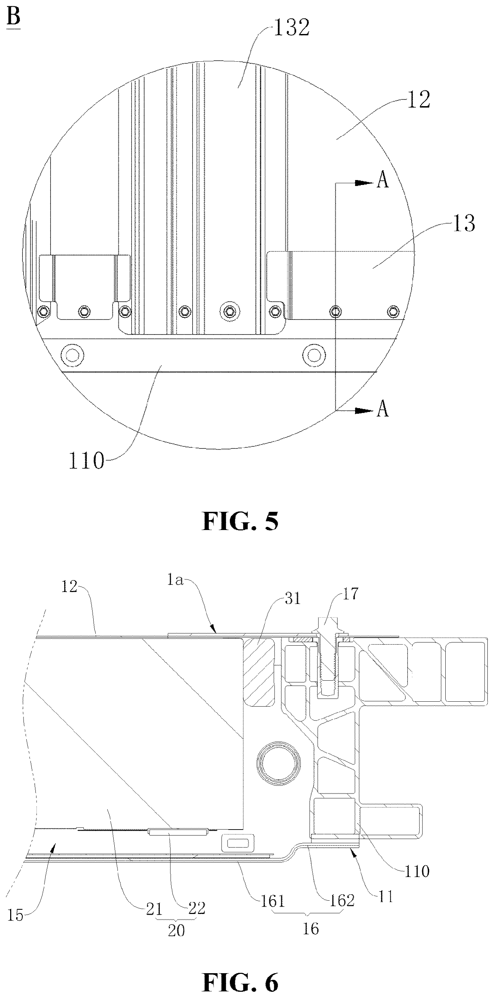

In some embodiments, referring to FIG. 6, the upper part of the battery cells 20 is fixedly connected to the top cover 12 by bonding.

In the above technical solution, by bonding the upper part of the battery cells 20 to the top cover 12, the stability of connection between the battery cells 20 and the top cover 12 can be enhanced while facilitating operation.

In some embodiments, referring to FIG. 6, the battery cell 20 includes a body 21 and an electrode terminal 22. The electrode terminal 22 is arranged on the lower side of the body 21, and the upper surface of the body 21 is connected to the top cover 12.

For example, the upper surface of the body 21 is bonded to the top cover 12.

In the above technical solution, the electrode terminal 22 is arranged on the lower side of the body 21, and the upper surface of the body 21 is connected to the top cover 12, so that while the structural strength of the top cover 12 is enhanced, the electrode terminal 22 can be kept away from the top cover 12, reducing the possibility of the top cover 12 being deformed and squeezing the electrode terminal 22, thereby improving the safety of the battery cell 20.

In some embodiments, the connection between the top cover 12 and the box body 11 includes at least one of welding, FDS connection, bolt connection, and bonding.

The expression "connection between the top cover 12 and the box body 11 includes at least one of welding, flow drill screw connection, bolt connection, and bonding" may mean that the connection between the top cover 12 and the box body 11 includes one of welding, flow drill screw connection, bolt connection, and bonding; alternatively, the connection between the top cover 12 and the box body 11 includes two of welding, flow drill screw connection, bolt connection, and bonding; alternatively, the connection between the top cover 12 and the box body 11 includes three of welding, flow drill screw connection, bolt connection, and bonding; or alternatively, the connection between the top cover 12 and the box body 11 includes the four of welding, flow drill screw connection, bolt connection, and bonding.

In the above technical solution, the connection between the top cover 12 and the box body 11 includes at least one of welding, flow drill screw connection, bolt connection, and bonding. By connecting the top cover 12 and the box body 11 through the connection mentioned above, the stability of connection between the top cover 12 and the box body 11 can be enhanced, thereby improving the stability of the structure of the battery box 1 and facilitating operation.

In some embodiments, referring to FIG. 6, the connection between the top cover 12 and the box body 11 includes bolt connection.

For example, the bolt 17 is an M6 bolt or an M8 bolt.

The expression "connection between the top cover 12 and the box body 11 includes bolt connection" may mean that while the top cover 12 and the box body 11 can be connected by a bolt, they can also be connected by other means, such as welding, flow drill screw connection, or bonding as mentioned above.

For example, when the battery is used in a vehicle, the battery is arranged at the bottom of the vehicle body, and the top cover of the battery can constitute at least part of the floor of the vehicle. When the vehicle suffers a side collision, the battery tends to be subjected to shear force, that is, the top cover and the box body are subjected to shear force, so that the connection structure between the top cover and the box body is likely to be damaged by the shear force, the overall stability of the battery box is reduced, and the safety of the battery is affected.

In the above technical solution, the top cover 12 and the box body 11 are connected by a bolt. The bolt 17 has good shear resistance, so that the strength of connection between the top cover 12 and the box body 11 is relatively high, and the stability of connection between the top cover 12 and the box body 11 is enhanced, thereby improving the stability and reliability of the overall structure of the battery box 1, which helps to improve the safety of the battery 100. In addition, such connection makes the top cover 12 and the box body 11 detachable relative to each other, which facilitates replacement or maintenance of the top cover 12 or the box body 11 as well as maintenance of the battery cell 20 in the accommodation cavity 15.

In some embodiments, referring to FIG. 1, the connection between the top cover 12 and the box body 11 includes bolt connection, and there are at least two bolts 17, and the at least two bolts 17 are arranged at an interval along the circumference of the top cover 12.

The expression "there are at least two bolts 17" means that there are two or more bolts 17.

In the above technical solution, at least two bolts 17 are arranged at an interval along the circumference of the top cover 12, so that the top cover 12 and the box body 11 can be connected along the circumference of the top cover 12, and the stability of connection between the top cover 12 and the box body 11 is enhanced, so as to further improve the stability and reliability of the overall structure of the battery box 1, thereby further improving the safety of the battery 100.

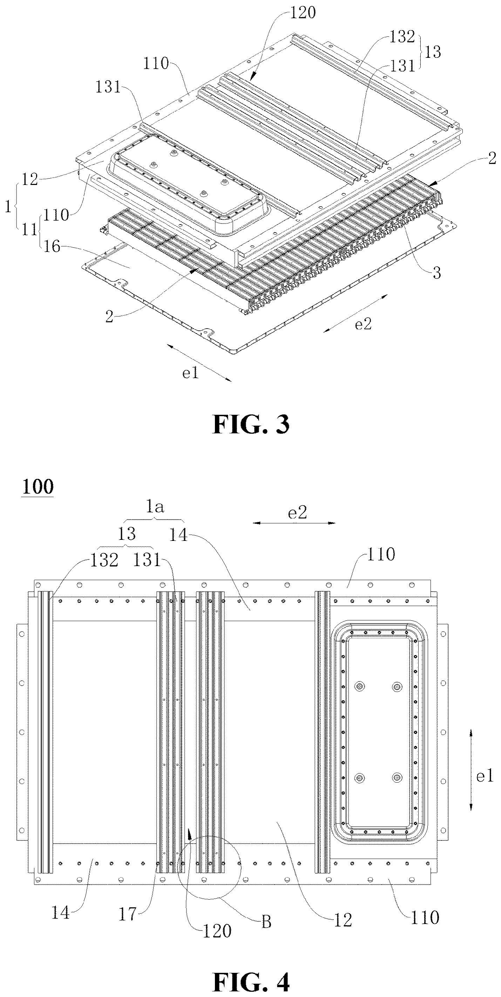

In some embodiments, referring to FIGS. 3 to 6, the box body 11 includes a side beam 110 surrounding the outer peripheral side of the accommodation cavity 15, the top cover 12 is connected to the top of the side beam 110, at least part of the side beam 110 is spaced apart from the battery cell 20; and a buffer structure 3 is provided between the side beam 110 and the battery cell 20.

The expression "at least part of the side beam 110 is spaced apart from the battery cell 20" means that part of the side beam 110 is spaced apart from the battery cell 20; or alternatively, the entire side beam 110 is spaced apart from the battery cell 20.

In the above technical solution, the transmission of acting force between the side beam 110 and the battery cell 20 can be blocked by spacing the side beam 110 apart from the battery cell 20. For example, when the side beam 110 is subjected to collision force, the side beam 110 is not likely to transmit the collision force to the battery cell 20, which can improve the safety of the battery cell 20. The side beam 110 is spaced apart from the battery cell 20 so that the side beam 110 has deformation space. As such, when the side beam 110 is subjected to force and deformed, the possibility of the battery cell 20 being squeezed by the side beam 110 can be reduced, which can further ensure the safety and reliability of the battery 100. In addition, the buffer structure 3 can absorb collision energy. When the battery 100 is subjected to collision, the side beam 110 is subjected to acting force, and the side beam 110 can transmit the acting force to the buffer structure 3. The buffer structure 3 absorbs the collision energy, so that the acting force transmitted to the battery cell 20 is smaller, which can improve the safety of the battery cell 20, thereby improving the safety of the battery 100.

In some embodiments, referring to FIG. 6, the buffer structure 3 includes a buffer block 31; and the buffer block 31 includes at least one of a rubber block, a foam block, and a sponge block.

The expression "the buffer block 31 includes at least one of a rubber block, a foam block, and a sponge block" means that the buffer block 31 includes one of a rubber block, a foam block, and a sponge block; alternatively, the buffer block 31 includes two of a rubber block, a foam block, and a sponge block; or alternatively, the buffer block 31 includes the three of a rubber block, a foam block, and a sponge block.

In the above technical solution, the buffer block 31 can absorb collision energy. When the battery 100 is subjected to collision, the side beam 110 is subjected to acting force, and the side beam 110 can transmit the acting force to the buffer structure 3. The buffer block 31 of the buffer structure 3 absorbs the collision energy, so that the acting force transmitted to the battery cell 20 is smaller, which can improve the safety of the battery cell 20, thereby improving the safety of the battery 100. Besides, the rubber block, foam block, and sponge block are relatively inexpensive.

In some embodiments, structural adhesive is filled between the buffer block 31 and at least one of the top cover 12, the side beam 110, and the battery cell 20.

The expression "structural adhesive is filled between the buffer block 31 and at least one of the top cover 12, the side beam 110, and the battery cell 20" means that structural adhesive is filled between the buffer block 31 and one of the top cover 12, the side beam 110, and the battery cell 20; alternatively, structural adhesive is filled between the buffer block 31 and any two of the top cover 12, the side beam 110, and the battery cell 20; or alternatively, structural adhesive is filled between the buffer block 31 and each of the top cover 12, the side beam 110, and the battery cell 20.

For example, in some embodiments of the present application, structural adhesive is filled between the buffer block 31 and each of the top cover 12, the side beam 110, and the battery cell 20.

In the above technical solution, structural adhesive is filled between the buffer block 31 and at least one of the top cover 12, the side beam 110, and the battery cell 20, so that the buffer block 31 can be bonded to the top cover 12, the side beam 110, and the battery cell 20, which facilitates the installation of the buffer block 31 and can improve the overall structural strength and stability of the battery 100. For example, when the battery 100 is used in the vehicle 1000, the battery 100 is arranged at the bottom of the vehicle body, and the top cover 12 of the battery 100 constitutes at least part of the floor of the vehicle 1000. When the vehicle 1000 suffers a side collision, the buffer structure 3 can absorb part of the collision energy and reduce the impact of the collision force on the battery 100, thereby reducing the impact of the collision force on the floor of the vehicle 1000, so as to improve the side collision resistance of the entire vehicle.

In some embodiments, referring to FIG. 6, the box body 11 includes a bottom guard plate 16 and a side beam 110, the side beam 110 surrounds the outer peripheral side of the accommodation cavity 15, the bottom guard plate 16 is connected to the bottom of the side beam 110, the bottom guard plate 16 includes a main body 161 and a connection portion 162, the connection portion 162 surrounds the outer peripheral side of the main body 161, the connection portion 162 is located below the side beam 110 and connected to the side beam 110, the main body 161 is located below the battery cell 20 and spaced apart from the battery cell 20; and a reinforcement structure 1a is provided on the top cover 12.

In the above technical solution, the bottom guard plate 16 can be connected to the side beam 110 by connecting the connection portion 162 of the bottom guard plate 16 to the side beam 110; the main body 161 is spaced apart from the battery cell 20 so that a buffering energy-absorbing space is provided between the main body 161 and the battery cell 20. When the main body 161 is subjected to acting force, the main body 161 can be deformed to absorb part of the energy. The buffering energy-absorbing space can absorb part of the collision energy, thereby reducing the possibility of the battery cell 20 being squeezed by the main body 161, so as to further improve the safety of the battery cell 20. In addition, by providing the reinforcement structure 1a on the top cover 12, the rigidity and structural strength of the top cover 12 can be further improved, and the possibility of damage to the top cover 12 can be further reduced when the battery 100 is subjected to force, thereby improving the safety performance of the battery 100. For example, the battery 100 is used in the vehicle 1000 and is suitable for being installed at the bottom of the vehicle body. The top cover 12 of the battery 100 can constitute at least part of the floor of the vehicle 1000. The structural strength of the top cover 12 is further enhanced, which can improve the bearing capacity of the top cover 12 for the seat, and the structural strength of the floor is further enhanced, thereby further improving the side collision resistance of the entire vehicle.

In some embodiments, referring to FIG. 6, the connection between the top cover 12 and the box body 11 includes bolt connection, and the bolt 17 is passed through the reinforcement structure 1a, the top cover 12, and the box body 11.

The expression "the connection between the top cover 12 and the box body 11 includes bolt connection" may mean that while the top cover 12 and the box body 11 can be connected by a bolt, they can also be connected by other means, such as welding or bonding.

In the above technical solution, by passing the bolt 17 through the reinforcement structure 1a, the top cover 12, and the box body 11, the reinforcement structure 1a, the top cover 12, and the box body 11 can be connected to each other, which can further improve the structural strength of the top cover 12, and further enhance the strength of connection between the reinforcement structure 1a, the top cover 12, and the box body 11, thereby further improving the stability and reliability of the overall structure of the battery box 1.

In some embodiments, referring to FIG. 6, the reinforcement structure 1a includes a reinforcement beam 13 extending in a first direction which intersects with the vertical direction.

For example, the reinforcement beam 13 has a cavity structure, and the cross section of the reinforcement beam 13 is in a π-like shape.

In the above technical solution, by extending the reinforcement beam 13 in the first direction, the structural strength of the top cover 12 can be improved in the first direction, which helps to improve the overall structural strength of the top cover 12 and reduce the possibility of the top cover 12 being damaged when subjected to force.

In some embodiments, referring to FIGS. 3 and 4, there are a plurality of reinforcement beams 13 arranged in a second direction which intersects with the vertical direction and the first direction. At least some of the reinforcement beams 13 are located at at least one end of the top cover 12 in the second direction.

The expression "at least some of the reinforcement beams 13 are located at at least one end of the top cover 12 in the second direction" may mean that all of the plurality of reinforcement beams 13 are located at one end of the top cover 12 in the second direction; alternatively, all of the plurality of reinforcement beams 13 are located at the other end of the top cover 12 in the second direction; alternatively, some of the plurality of reinforcement beams 13 are located at one end of the top cover 12 in the second direction, and the other ones of the plurality of reinforcement beams 13 are located at the other end of the top cover 12 in the second direction; or alternatively, some of the plurality of reinforcement beams 13 are located at the opposite ends of the top cover 12 in the second direction, and the other ones of the plurality of reinforcement beams 13 are close to the middle of the top cover 12 in the second direction.

For example, referring to FIGS. 3 and 4, in some embodiments of the present application, there may be four reinforcement beams 13, and the four reinforcement beams 13 are arranged at intervals in the second direction which is perpendicular to the vertical direction and the first direction. One of the reinforcement beams 13 is located at one end of the top cover 12 in the second direction, another reinforcement beam 13 is located at the other end of the top cover 12 in the second direction, and the other two reinforcement beams 13 are located in the middle of the top cover 12 in the second direction.

In the above technical solution, by arranging the plurality of reinforcement beams 13 in the second direction, the structural strength of the top cover 12 can be improved in the second direction, which helps to improve the overall structural strength of the top cover 12 and further reduce the possibility of the top cover 12 being damaged when subjected to force. By locating at least some of the plurality of reinforcement beams 13 at at least one end of the top cover 12 in the second direction, the structural strength of the opposite ends of the top cover 12 in the second direction can be enhanced, thereby enhancing the overall structural strength of the top cover 12 and improving the safety performance of the battery 100.

In some embodiments, referring to FIGS. 3 and 4, the battery 100 is suitable for being installed at the bottom of the vehicle body, the first direction is the lateral direction, the second direction is the longitudinal direction, the part of the top cover 12 opposite to the seat of the vehicle 1000 is the seat mounting portion 120, and at least some of the plurality of reinforcement beams 13 are located at the seat mounting portion 120.

The expression "at least some of the plurality of reinforcement beams 13 are located at the seat mounting portion 120" may mean that all of the plurality of reinforcement beams 13 are located at the seat mounting portion 120; or alternatively, some of the plurality of reinforcement beams 13 are located at the seat mounting portion 120, for example, two of the four reinforcement beams 13 are located at the seat mounting portion 120.

In the above technical solution, by locating at least some of the plurality of reinforcement beams 13 at the seat mounting portion 120, the rigidity and load-bearing capacity of the seat mounting portion 120 can be enhanced, so that the top cover 12 of the battery 100 can better bear the load from the seat, thereby reducing the risk of deformation of the top cover 12 due to excessive load. For example, when the top cover 12 of the battery 100 constitutes at least part of the floor of the vehicle 1000, a reinforcement beam 13 is provided on the top cover 12 to increase the structural strength of the floor of the vehicle 1000, which can improve the load-bearing capacity of the top cover 12 and enhance the side collision resistance capacity of the entire vehicle.

In some embodiments, referring to FIGS. 3 and 4, the plurality of reinforcement beams 13 include a first reinforcement beam 131 and a second reinforcement beam 132, the first reinforcement beam 131 is located at the seat mounting portion 120, the second reinforcement beam 132 is located on at least one side of the first reinforcement beam 131 in the second direction, and the structural strength of the first reinforcement beam 131 is greater than the structural strength of the second reinforcement beam 132.

The second direction is the longitudinal direction, and the expression "the second reinforcement beam 132 is located on at least one side of the first reinforcement beam 131 in the second direction" means that the second reinforcement beam 132 is located on the front side of the first reinforcement beam 131; alternatively, the second reinforcement beam 132 is located on the rear side of the first reinforcement beam 131; or alternatively, the second reinforcement beam 132 is located on both the front and rear sides of the first reinforcement beam 131.

For example, there are two first reinforcement beams 131, and the two first reinforcement beams 131 are located at the seat mounting portion 120; there are two second reinforcement beams 132, and when the second reinforcement beams 132 are located on the front and rear sides of the first reinforcement beam 131, one of the second reinforcement beams 132 is located on the front side of the first reinforcement beam 131, and the other second reinforcement beam 132 is located on the rear side of the first reinforcement beam 131. The width of the first reinforcement beam 131 may be greater than the width of the second reinforcement beam 132, so that the structural strength of the first reinforcement beam 131 is greater than the structural strength of the second reinforcement beam 132.

In the above technical solution, by making the structural strength of the first reinforcement beam 131 greater than the structural strength of the second reinforcement beam 132, the structural strength and load-bearing capacity of the seat mounting portion 120 can be further enhanced, so that the top cover 12 of the battery 100 can better bear the load from the seat, thereby further reducing the risk of deformation of the top cover 12 due to excessive load.

In some embodiments, referring to FIG. 6, the reinforcement structure 1a is detachably connected to the top cover 12.

For example, the reinforcement structure 1a may be connected to the top cover 12 by bolts.

In the above technical solution, the reinforcement structure 1a is detachably connected to the top cover 12, which facilitates the disassembly and assembly between the reinforcement structure 1a and the top cover 12, and facilitates the replacement or maintenance of the reinforcement structure 1a or the top cover 12.

In some embodiments, referring to FIGS. 4 and 5, the reinforcement structure 1a includes a reinforcement plate 14, and the reinforcement plate 14 and the top cover 12 are stacked in the vertical direction.

For example, the reinforcement plate 14 is stacked on the upper side of the top cover 12.

In the above technical solution, by arranging the reinforcing plate 14 on the top cover 12, the structural strength and load-bearing capacity of the top cover 12 can be enhanced, thereby further improving the safety performance of the battery 100.

In some embodiments, referring to FIG. 4, the reinforcing plate 14 extends in a second direction which intersects with the vertical direction. There are a plurality of reinforcement plates 14, and at least some of the reinforcement plates 14 are located at at least one end of the top cover 12 in the first direction.

For example, the second direction is perpendicular to the vertical direction.

The expression "at least some of the plurality of reinforcement plates 14 are located at at least one end of the top cover 12 in the first direction" may mean that all of the plurality of reinforcement plates 14 are located at one end of the top cover 12 in the first direction; alternatively, all of the plurality of reinforcement plates 14 are located at the other end of the top cover 12 in the first direction; alternatively, some of the plurality of reinforcement plates 14 are located at one end of the top cover 12 in the first direction, and the other ones of the plurality of reinforcement plates 14 are located at the other end of the top cover 12 in the first direction; alternatively, some of the plurality of reinforcement plates 14 are located at one end of the top cover 12 in the first direction, and the other ones of the plurality of reinforcement plates 14 are located at the other end of the top cover 12 in the first direction; or alternatively, some of the plurality of reinforcement plates 14 are located at the opposite ends of the top cover 12 in the first direction, and the other ones of the plurality of reinforcement plates 14 are located in the middle of the top cover 12 in the first direction.

In some embodiments of the present application, some of the plurality of reinforcement plates 14 are located at one end of the top cover 12 in the first direction, and the other ones of the plurality of reinforcement plates 14 are located at the other end of the top cover 12 in the first direction.

In the above technical solution, by extending the reinforcement plates 14 in the second direction, the structural strength of the top cover 12 can be improved in the second direction, which helps to improve the overall structural strength of the top cover 12 and reduce the possibility of the top cover 12 being damaged when subjected to force, thereby further improving the safety of the battery 100. By locating at least some of the plurality of reinforcement plates 14 at at least one end of the top cover 12 in the first direction, the structural strength of the outer edge of the top cover 12 can be enhanced, and when the top cover 12 of the battery 100 is subjected to acting force, the top cover 12 is not likely to be deformed, which is beneficial to improving the safety performance of the battery 100 and alleviating the impact on the service life of the battery 100.

In some embodiments, referring to FIG. 4, the connection between the top cover 12 and the box body 11 includes bolt connection, and at least some of the bolts 17 are passed through the reinforcement plate 14, the top cover 12, and the box body 11.

The expression "at least some of the bolts 17 are passed through the reinforcement plate 14, the top cover 12, and the box body 11" may mean that some of the plurality of bolts 17 are passed through the reinforcement plate 14, the top cover 12, and the box body 11; or alternatively, all of the plurality of bolts 17 are passed through the reinforcement plate 14, the top cover 12, and the box body 11.

In the above technical solution, by passing the bolts 17 through the reinforcement plate 14, the top cover 12, and the box body 11, the reinforcement plate 14, the top cover 12, and the box body 11 can be connected to each other, which can further improve the structural strength of the top cover 12, and further enhance the strength of connection between the reinforcement plate 14, the top cover 12, and the box body 11, thereby further improving the stability and reliability of the overall structure of the battery box 1.

In some embodiments, referring to FIGS. 4 to 6, the reinforcement structure 1a includes a reinforcement beam 13, the connection between the top cover 12 and the box body 11 includes bolt connection, and at least some of the bolts 17 are passed through the reinforcement beam 13, the reinforcement plate 14, the top cover 12, and the box body 11.

The expression "at least some of the bolts 17 are passed through the reinforcement beam 13, the reinforcement plate 14, the top cover 12, and the box body 11" may mean that some of the plurality of bolts 17 are passed through the reinforcement beam 13, the reinforcement plate 14, the top cover 12, and the box body 11; or alternatively, all of the plurality of bolts 17 are passed through the reinforcement beam 13, the reinforcement plate 14, the top cover 12, and the box body 11.

In the above technical solution, by passing at least some of the bolts 17 through the reinforcement beam 13, the reinforcement plate 14, the top cover 12, and the box body 11, the reinforcement beam 13, the reinforcement plate 14, the top cover 12, and the box body 11 can be connected to each other, which can further improve the structural strength of the top cover 12, and better enhance the strength of connection between the reinforcement plate 14, the top cover 12, and the box body 11, thereby better improving the stability and reliability of the structure of the battery box 1.

In some embodiments, the battery 100 is used in the vehicle 1000 and is suitable for being installed at the bottom of the vehicle body, and the top cover 12 is used to constitute at least part of the floor of the vehicle 1000.

The expression "the top cover 12 is used to constitute at least part of the floor of the vehicle 1000" means that the top cover 12 may constitute part of the floor of the vehicle 1000; or alternatively, the top cover 12 may constitute the entirety of the floor of the vehicle 1000.

In the above technical solution, the upper part of the battery cell 20 is connected to the top cover 12, which can enhance the rigidity and structural strength of the top cover 12, improve the load-bearing capacity of the top cover 12, and reduce the degree of deformation of the top cover 12 when subjected to force; and enhance the structural strength of the floor of the vehicle 1000 to improve the side collision resistance capacity of the entire vehicle.

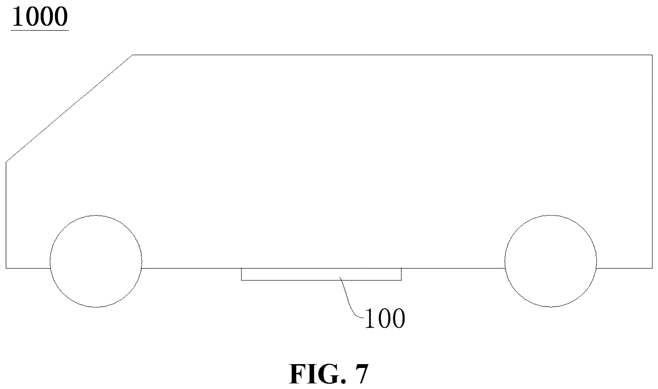

Referring to FIG. 7, in a second aspect, the present application provides a vehicle 1000, including the battery 100 described above.

The battery 100 can provide electrical energy for the vehicle 1000, and the battery 100 can serve as a driving power source for the vehicle 1000, providing driving force for the vehicle 1000.

Optionally, as shown in FIG. 7, when the battery 100 is used in the vehicle 1000, the battery 100 may be arranged at the bottom of the vehicle 1000. The battery 100 can be used to supply power to the vehicle 1000. For example, the battery 100 can serve as the operating power source for the vehicle 1000 and is used in the circuit system of the vehicle 1000. The vehicle 1000 may further include a controller and a motor. The controller is used to control the battery 100 to supply power to the motor, for example, for meeting operating power demand when the vehicle 1000 is starting, navigating, and driving.

By using the battery 100 as described above, where the upper part of at least some of the battery cells 20 is fixedly connected to the top cover 12, the rigidity and structural strength of the top cover 12 can be enhanced, the deformation of the top cover 12 can be reduced when the battery 100 is subjected to force, the possibility of damage to the top cover 12 can be reduced, the safety performance of the battery 100 can be improved, and the impact on the service life of the battery 100 can be alleviated.

In some embodiments of the present application, referring to FIGS. 1 to 7, the battery 100 is used in the vehicle 1000 and is suitable for being installed at the bottom of the vehicle body. The battery 100 includes a battery box 1 and a plurality of battery rows 2. The plurality of battery rows 2 are arranged in a first direction. Each battery row 2 includes a plurality of battery cells 20 arranged in a second direction. The first direction is the lateral direction, and the second direction is the longitudinal direction.

The battery box 1 includes a box body 11 and a top cover 12. The top cover 12 is arranged on the top of the box body 11. The top cover 12 may constitute at least part of the floor of the vehicle 1000. An accommodation cavity 15 is defined between the top cover 12 and the box body 11, and the battery cell 20 is placed upside down in the accommodation cavity 15 of the battery box 1. The battery cell 20 includes a body 21 and an electrode terminal 22. The electrode terminal 22 is arranged on the lower side of the body 21, and the upper surface of the body 21 is bonded to the top cover 12.

A reinforcement structure 1a is provided on the top cover 12, part of the reinforcement structure 1a is close to the outer edge of the top cover 12, part of the reinforcement structure 1a is located in the middle of the top cover 12, the reinforcement structure 1a and the top cover 12 are independently formed, and the reinforcement structure 1a is detachably connected to the top cover 12. The reinforcement structure 1a includes a plurality of reinforcement beams 13 and a plurality of reinforcement plates 14. The plurality of reinforcement beams 13 are arranged in the second direction. The reinforcement beams 13 extend in the first direction, and the reinforcement plates 14 extend in the second direction.

The top cover 12 is provided with four reinforcement beams 13 arranged in the longitudinal direction. The reinforcement beams 13 and the top cover 12 are independently formed, and the reinforcement beams 13 are detachably connected to the top cover 12. The reinforcement beam 13 has a cavity structure, and the cross section of the reinforcement beam 13 is in a π-like shape. The four reinforcement beams 13 include two first reinforcement beams 131 and two second reinforcement beams 132. The structural strength of the first reinforcement beams 131 is greater than the structural strength of the second reinforcement beams 132. The portion of the top cover 12 opposite to the seat of the vehicle 1000 is the seat mounting portion 120, the two first reinforcement beams 131 are arranged at the seat mounting portion 120, the two second reinforcement beams 132 are located on the front and rear sides of the first reinforcement beams 131, and one of the first reinforcement beams 131 is close to the front edge of the top cover 12, and the other first reinforcement beam 131 is close to the rear edge of the top cover 12. The reinforcement plates 14 and the top cover 12 are formed independently, and the reinforcement plates 14 are detachably connected to the top cover 12. The reinforcement plates 14 and the top cover 12 are stacked in the vertical direction, and the reinforcement plates 14 are close to the outer edge of the top cover 12.

The connection between the top cover 12 and the box body 11 includes bolt connection, the bolt 17 is an M8 bolt, there are a plurality of bolts 17, and the plurality of bolts 17 are arranged at intervals along the circumference of the top cover 12. Some of the bolts 17 are passed through the reinforcement beam 13, the reinforcement plate 14, the top cover 12, and the box body 11.

The box body 11 includes a bottom guard plate 16 and a side beam 110. The side beam 110 surrounds the outer peripheral side of the accommodation cavity 15. The top cover 12 is connected to the top of the side beam 110. The side beam 110 is spaced apart from the battery cell 20. A buffer structure 3 is provided between the side beam 110 and the battery cell 20. The buffer structure 3 includes a buffer block 31. The buffer block 31 is a rubber block. Structural adhesive is filled between the buffer block 31 and the top cover 12, the side beam 110, and the battery cell 20. The bottom guard plate 16 includes a main body 161 and a connection portion 162. The connection portion 162 surrounds the outer peripheral side of the main body 161. The connection portion 162 is located below the side beam 110 and is connected to the side beam 110 by a bolt. The main body 161 is located below the battery cell 20, and the main body 161 is spaced apart from the battery cell 20.

In the above technical solution, by fixedly connecting the upper part of the battery cell 20 to the top cover 12, the rigidity and structural strength of the top cover 12 can be enhanced, the deformation of the top cover 12 can be reduced when the battery 100 is subjected to force, the possibility of damage to the top cover 12 can be reduced, the safety performance of the battery 100 can be improved, and the impact on the service life of the battery 100 can be alleviated.

In the description of the specification, the explanation with reference to the terms such as "an embodiment," "some embodiments," "exemplary embodiments," "examples," "specific examples," or "some examples" means that specific features, structures, materials, or characteristics described in combination with the embodiment(s) or example(s) are included in at least one embodiment or example of the present application. In the specification, the illustrative expressions of the above-mentioned terms do not necessarily refer to the same embodiment or example. Moreover, the specific features, structures, materials, or characteristics described herein may be combined in any one or more embodiments or examples in a suitable manner.

Although the embodiments of the present application have been shown and described, those of ordinary skill in the art will understand that various changes, modifications, substitutions and modifications can be made to these embodiments without departing from the principles and purposes of the present application. The scope of the present application is defined by the claims and their equivalents.

## Claims

1. A battery, comprising:
a battery box comprising a box body and a top cover, the top cover being arranged on the top of the box body, and an accommodation cavity being defined between the top cover and the box body; and
at least one battery cell, all of the battery cells being arranged in the accommodation cavity, and an upper part of at least some of the battery cells being fixedly connected to the top cover.

2. The battery according to claim 1, wherein the upper part of the battery cells is fixedly connected to the top cover by bonding.

3. The battery according to claim 1 or 2, wherein the battery cell comprises a body and an electrode terminal, the electrode terminal is arranged on a lower side of the body, and an upper surface of the body is connected to the top cover.

4. The battery according to any one of claims 1 to 3, wherein the connection between the top cover and the box body comprises at least one of welding, flow drill screw connection, bolt connection, and bonding.

5. The battery according to claim 4, wherein the connection between the top cover and the box body comprises bolt connection.

6. The battery according to claim 4, wherein the connection between the top cover and the box body comprises bolt connection, and there are at least two bolts, and the at least two bolts are arranged at an interval along the circumference of the top cover.

7. The battery according to any one of claims 1 to 6, wherein the box body comprises a side beam surrounding an outer peripheral side of the accommodation cavity, the top cover is connected to the top of the side beam, and at least part of the side beam is spaced apart from the battery cell; and
a buffer structure is provided between the side beam and the battery cell.

8. The battery according to claim 7, wherein the buffer structure comprises a buffer block; and
the buffer block comprises at least one of a rubber block, a foam block, and a sponge block.

9. The battery according to claim 8, wherein structural adhesive is filled between the buffer block and at least one of the top cover, the side beam, and the battery cell.

10. The battery according to any one of claims 1 to 6, wherein the box body comprises a bottom guard plate and a side beam, the side beam surrounds the outer peripheral side of the accommodation cavity, the bottom guard plate is connected to the bottom of the side beam, the bottom guard plate comprises a main body and a connection portion, the connection portion surrounds the outer peripheral side of the main body, the connection portion is located below the side beam and connected to the side beam, and the main body is located below the battery cell and spaced apart from the battery cell; and a reinforcement structure is provided on the top cover.

11. The battery according to claim 10, wherein the connection between the top cover and the box body comprises bolt connection, and the bolt is passed through the reinforcement structure, the top cover, and the box body.

12. The battery according to claim 10, wherein the reinforcement structure comprises a reinforcement beam extending in a first direction which intersects with the vertical direction.

13. The battery according to claim 12, wherein there are a plurality of reinforcement beams arranged in a second direction which intersects with the vertical direction and the first direction; and
at least some of the plurality of reinforcement beams are located at at least one end of the top cover in the second direction.

14. The battery according to claim 13, wherein the battery is suitable for being installed at the bottom of the vehicle body, the first direction is the lateral direction, the second direction is the longitudinal direction, the part of the top cover opposite to the vehicle seat is a seat mounting portion, and at least some of the plurality of reinforcement beams are located at the seat mounting portion.

15. The battery according to claim 14, wherein the plurality of reinforcement beams comprise a first reinforcement beam and a second reinforcement beam, the first reinforcement beam is located at the seat mounting portion, the second reinforcement beam is located on at least one side of the first reinforcement beam in the second direction, and the structural strength of the first reinforcement beam is greater than the structural strength of the second reinforcement beam.

16. The battery according to claim 10, wherein the reinforcement structure is detachably connected to the top cover.

17. The battery according to claim 10, wherein the reinforcement structure comprises a reinforcement plate, and the reinforcement plate and the top cover are stacked in the vertical direction.

18. The battery according to claim 17, wherein the reinforcement plate extends in the second direction which intersects with the vertical direction; and
there are a plurality of reinforcement plates, and at least some of the plurality of reinforcement plates are located at at least one end of the top cover in the first direction.

19. The battery according to claim 17, wherein the connection between the top cover and the box body comprises bolt connection, and least some of the bolts are passed through the reinforcement plate, the top cover, and the box body.

20. The battery according to claim 17, wherein the reinforcement structure comprises a reinforcement beam, the connection between the top cover and the box body comprises bolt connection, and least some of the bolts are passed through the reinforcement beam, the reinforcement plate, the top cover, and the box body.

21. The battery according to any one of claims 1 to 20, wherein the battery is used in the vehicle and is suitable for being installed at the bottom of the vehicle body, and the top cover is used to constitute at least part of the floor of the vehicle.

22. A vehicle, comprising the battery according to any one of claims 1 to 21.
